# EUROPEAN PATENT APPLICATION

(11) **EP 1 993 114 A1**
(43) Date of publication of application: **19.11.2008**
(21) Application number: 08007056.8
(22) Date of filing: 09.04.2008
(51) Int. Cl.: H01G 9/06

(54) **Aluminum electrolytic wound capacitor element-fixing tape and aluminum electrolytic capacitor**

(30) Priority: 14.05.2007 JP 2007127980
(71) Applicant: NITTO DENKO CORPORATION, Ibaraki-shi, Osaka 567-8680 (JP)
(72) Inventor: Murata, Akihisa c/o Nitto Denko Corporation, Ibaraki-shi Osaka 567-8680 (JP)
(74) Representative: Grünecker, Kinkeldey, Stockmair & Schwanhäusser Anwaltssozietät

(57) **Abstract**

Provided is an aluminum electrolytic wound capacitor-fixing pressure-sensitive adhesive tape (3) that can be used for aluminum electrolytic capacitors without causing tape breakage in the tape wrapping process, without causing a reduction in taping workability and with preventing the problem of an unnecessary increase in the size of the wound capacitor. Further provided is an aluminum electrolytic capacitor that uses the pressure-sensitive adhesive tape (3). The aluminum electrolytic wound capacitor element-fixing tape (3) includes a supporting base material (1) and a pressure-sensitive adhesive layer (2) provided on one side of the supporting base material (1), wherein the supporting base material (1) includes at least one layer of Manila hemp paper, Kraft paper, synthetic fiber paper, or mixed paper made of two or more thereof, the supporting base material (1) has a density of more than 0.9 g/cm³, and the supporting base material (1) has a thickness of 15 to 50 µm.

## Description

### BACKGROUND OF THE INVENTION

### Field of the Invention

The invention relates to an aluminum electrolytic wound capacitor element-fixing tape including a supporting base material and a pressure-sensitive adhesive layer and to an aluminum electrolytic capacitor using the tape.

### Description of the Related Art

In conventional techniques, adhesives or pressure-sensitive adhesive tapes are used to fix windings of aluminum electrolytic capacitor elements, and pressure-sensitive adhesive tape methods are predominant, because the mechanization thereof or the like is easy. Such pressure-sensitive adhesive tapes for use in aluminum electrolytic capacitors include a proposed pressure-sensitive adhesive tape for fixing the end of an aluminum electrolytic capacitor, which uses a supporting base material made of Manila hemp paper, Kraft paper, synthetic fiber paper, or the like (see Patent Literatures 1 and 2 listed below).

When used to fix a winding of an aluminum electrolytic capacitor element, such a pressure-sensitive adhesive tape has relatively insufficient strength, because its supporting base material is made of paper. For example, a thin pressure-sensitive adhesive tape using a supporting base material made of paper with a thickness of 50 µm or less has a risk of breaking when it is attached to a capacitor with a winding machine or can cause a need to reduce workability, such as a need to reduce the operation speed (taping workability) for avoidance of tape breakage. Particularly when the wound element-fixing tape has a width of 5 mm or less for small capacitors, the workability can be significantly reduced.

If thick paper such as paper with a thickness of more than 50 µm is used, the tape can have relatively high strength so that a reduction in taping workability can be avoided. In this case, however, the diameter of the wound capacitor can be unnecessarily increased to make it difficult to apply for a small capacitor.

Patent Literature 1: Japanese Patent Application Publication (JP-B) No. 62-62454

Patent Literature 2: JP-B No. 62-62455

### SUMMARY OF THE INVENTION

In view of the foregoing, therefore, it is an object of the invention to provide an aluminum electrolytic wound capacitor-fixing pressure-sensitive adhesive tape that can be used for aluminum electrolytic capacitors without causing tape breakage during the tape wrapping process and thus without causing a reduction in taping workability and with preventing the problem of an unnecessary increase in the size of the wound capacitor. It is another object of the invention to provide an aluminum electrolytic capacitor using such a pressure-sensitive adhesive tape.

### Means for Solving the Problems

As a result of investigations for achieving the objects, the inventors have found that the objects can be achieved with the aluminum electrolytic wound capacitor element-fixing tape described below, so that the invention has been completed.

Thus, the invention is directed to an aluminum electrolytic wound capacitor element-fixing tape, including: a supporting base material; and a pressure-sensitive adhesive layer provided on one side of the supporting base material, wherein the supporting base material includes at least one layer of Manila hemp paper, Kraft paper, synthetic fiber paper, or mixed paper made of two or more thereof, the supporting base material has a density of more than 0.9 g/cm³, and the supporting base material has a thickness of 15 to 50 µm.

The invention is also directed to an aluminum electrolytic wound capacitor element-fixing tape, including: a supporting base material; and a pressure-sensitive adhesive layer provided on one side of the supporting base material, wherein the supporting base material includes a multilayer laminate including at least two layers each made of Manila hemp paper, Kraft paper, synthetic fiber paper, or mixed paper made of two or more thereof, at least one layer of the multilayer laminate has a density of more than 0.9 g/cm³, and the supporting base material has a thickness of 15 to 50 µm.

In the aluminum electrolytic wound capacitor element-fixing tape of the invention, at least the outermost layer of the multilayer laminate opposite to the pressure-sensitive adhesive layer should have a density of more than 0.9 g/cm³.

The invention is also directed to an aluminum electrolytic capacitor including the aluminum electrolytic wound capacitor element-fixing tape of the invention.

### Effects of the Invention

In the aluminum electrolytic wound capacitor element-fixing tape of the invention, the supporting base material has at least one layer of Manila hemp paper, Kraft paper, synthetic fiber paper, or mixed paper made of two or more thereof, a density of more than 0.9 g/cm³, and a thickness of 15 to 50 µm. Such a tape has no risk of breaking in the tape wrapping process and thus causes no reduction in taping workability and is effective in preventing the problem of an unnecessary increase in the size of the wound capacitor, when used to form an aluminum electrolytic capacitor.

### BRIEF DESCRIPTION OF THE DRAWINGS

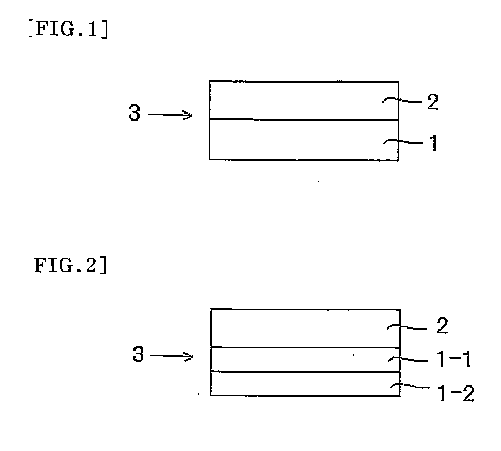

Fig. 1 is a schematic diagram showing an example of the pressure-sensitive adhesive tape according to the present invention; and
Fig. 2 is a schematic diagram showing another example of the pressure-sensitive adhesive tape according to the present invention.

### DETAILED DESCRIPTION OF THE PREFERRED EMBODIMENTS

The aluminum electrolytic wound capacitor-fixing pressure-sensitive adhesive tape of the invention includes a supporting base material and a pressure-sensitive adhesive layer. Such a structure is more specifically described below.

In an aspect of the invention, the supporting base material includes at least one layer of Manila hemp paper, Kraft paper, synthetic fiber paper, or mixed paper made of two or more thereof. The use of such paper can ensure heat resistance and liquid electrolyte retention capacity for electrolytic capacitors.

In another aspect of the invention, the supporting base material includes a multilayer laminate including at least two layers each made of Manila hemp paper, Kraft paper, synthetic fiber paper, or mixed paper made of two or more thereof. The use of the multilayer laminate including at least two layers of such paper can also ensure heat resistance and liquid electrolyte retention capacity for electrolytic capacitors.

The supporting base material including at least one layer of Manila hemp paper, Kraft paper, synthetic fiber paper, or mixed paper made of two or more thereof has a density of more than 0.9 g/cm³. If the density of the paper is 0.9 g/cm³ or less, it may fail to maintain the strength necessary for fixing aluminum electrolytic wound capacitor elements.

When the supporting base material is a multilayer laminate of at least two layers each made of Manila hemp paper, Kraft paper, synthetic fiber paper, or mixed paper made of two or more thereof, at least one layer of the multilayer laminate has a density of more than 0.9 g/cm³, and the outermost layer of the multilayer laminate, opposite to the pressure-sensitive adhesive layer, preferably have a density of more than 0.9 g/cm³. If the density of the paper is 0.9 g/cm³ or less, it may fail to maintain the strength necessary for fixing aluminum electrolytic wound capacitor elements.

The density (g/cm³) may be measured by the method described below. A test piece of the supporting base material of a size of about 1 m x about 1 m or of the rated size is sampled and measured for length, width and thickness and then measured for weight. The density is calculated from the weight and the moisture content (%) according to the formula: density (g/cm³)=[measured weight (g) x (1-moisture content (%)/ 100)]/[length (m) x width (m) x thickness (m)]. The moisture content may be determined by direct measurement of the paper moisture content with an electrical resistance moisture meter immediately after papermaking with a paper machine or determined by a drying method including the steps of placing an about 2 g of a test piece in a weighing vial, measuring its weight, drying it at 105±3°C for at least one hour, then cooling it to near room temperature in a desiccator to achieve a constant weight, then determining the weight loss, and calculating the percentage of the weight loss to the initial weight as the moisture content.

The supporting base material has a thickness of 15 to 50 µm, preferably of 20 to 40 µm. The supporting base material with a thickness of more than 50 µm is not suitable for use in small capacitors, because it undesirably increases the diameter of the wound capacitor. The strength of the supporting base material with a thickness of less than 15 µm can be too low to be practical. When the supporting base material has a multilayer structure, the outermost layer of the multilayer structure, which is opposite to the pressure-sensitive adhesive layer, preferably has a thickness of 10 µm or more, more preferably of 15 to 30 µm. If it is less than 10 µm, the supporting base material cannot surely have the strength desired for aluminum electrolytic wound capacitor element-fixing tapes.

In the pressure-sensitive adhesive tape according to the invention, the pressure-sensitive adhesive layer may comprise any material or composition having pressure-sensitive adhesive properties. Any conventional pressure-sensitive adhesive such as an acrylic, rubber-based or silicone pressure-sensitive adhesive may be used. In particular, an acrylic pressure-sensitive adhesive is preferably used.

An acrylic monomer capable of forming a polymer having pressure-sensitive adhesive properties and a low glass transition temperature (Tg) may be used as the primary monomer for the acrylic pressure-sensitive adhesive. A comonomer capable of forming a polymer having adhesive properties or cohesive strength and a high Tg or a monoethylenic unsaturated monomer, a functional group-containing monomer for use in improving crosslinkability or adhesion, may also be used.

Examples of the primary monomer include alkyl (meth)acrylates such as methyl (meth)acrylate, ethyl (meth)acrylate, butyl (meth)acrylate, isoamyl (meth)acrylate, n-hexyl (meth)acrylate, 2-ethylhexyl (meth)acrylate, isooctyl (meth)acrylate, isononyl (meth)acrylate, decyl (meth)acrylate, and dodecyl (meth)acrylate. One or more of the alkyl (meth)acrylates may be used as a monomer component or components for an acrylic polymer. The acrylic pressure-sensitive adhesive has a relatively high level of heat resistance and is most preferred for the invention.

Examples of the comonomer include vinyl group-containing compounds such as vinyl acetate, vinyl propionate, vinyl ether, styrene, acrylonitrile, and methacrylonitrile.

Examples of the functional group-containing monomer include carboxyl group-containing monomers such as acrylic acid, methacrylic acid, itaconic acid, maleic acid, fumaric acid, and crotonic acid; hydroxyl group-containing monomers such as 2-hydroxyethyl (meth)acrylate, 2-hydroxypropyl (meth)acrylate, 4-hydroxybutyl (meth)acrylate, N-methylolacrylamide, and allyl alcohol; tertiary amino group-containing monomers such as dimethylaminoethyl (meth)acrylate, diethylaminoethyl (meth)acrylate, and dimethylaminopropyl (meth)acrylate; amide group-containing monomers such as acrylamide and methacrylamide; N-substituted amide group-containing monomers such as N-methyl(meth)acrylamide, N-ethyl(meth)acrylamide, N-methoxymethyl(meth)acrylamide, N-ethoxymethyl(meth)acrylamide, N-tert-butyl(meth)acrylamide, and N-octyl(meth)acrylamide; and epoxy group-containing monomers such as glycidyl methacrylate. One or more of these copolymerizable monomer components may be used singly or in combination. Any of these copolymerizable monomers may be used in an amount of 70% by weight or less, preferably of 40% by weight or less, based on the total amount of all monomers.

The acrylic polymer may be produced by polymerization of a single monomer or a mixture of two or more monomers. The polymerization may be performed by any method such as solution polymerization, emulsion polymerization, bulk polymerization, and suspension polymerization. The acrylic polymer preferably has a weight average molecular weight (Mw) of 500,000 to 1,500,000, more preferably of 800,000 to 1,200,000. The degree of dispersion expressed as the ratio (Mw/Mn) between the weight average molecular weight (Mw) and the number average molecular weight (Mn) is preferably from 6 to 10.

The weight average molecular weight may be determined as a standard polystyrene-equivalent value by gel permeation chromatography (GPC) method. Specifically, a GPC main system includes HLC-8120GPC manufactured by TOSOH CORPORATION, which is used at a column temperature of 40°C and a pump flow rate of 0.5 ml/minute under the conditions below. Detector RI data are processed using a calibration curve of polystyrene standards each with a known molecular weight (in the range of 500 to 20,600,000) so that the molecular weight is determined as a polystyrene-equivalent molecular weight. Column used, TSK gel GMH-H (S) x 2 (manufactured by TOSOH CORPORATION); mobile phase, tetrahydrofuran; injected volume, 100 µl; sample concentration, 1.0 g/l (tetrahydrofuran solution).

The degree of dispersion is calculated as the ratio between the weight and number average molecular weights. The number average molecular weight is measured by the same method as that for the weight average molecular weight.

The acrylic pressure-sensitive adhesive may contain a crosslinking agent, as appropriate. Examples thereof include an isocyanate crosslinking agent, an epoxy crosslinking agent, an aziridine crosslinking agent, a chelate crosslinking agent, and the like.

The amount of the crosslinking agent used is preferably, but not limited to, from 0.1 to 15 parts, more preferably from 1 to 10 parts, based on 100 parts by weight of the acrylic polymer. If the amount is less than 0.1 parts by weight, the pressure-sensitive adhesive may have insufficient cohesive strength. If the amount is more than 15 parts by weight, the pressure-sensitive adhesive can be excessively crosslinked, which can lead to insufficient adhesive strength.

Besides the components described above, if necessary, the pressure-sensitive adhesive may contain any type of known conventional initiator, tackifier, age resistor, filler, colorant, chain transfer agent, or plasticizer, or any other additive.

The solvent to be used for the preparation of the pressure-sensitive adhesive layer is generally, but not limited to, an organic solvent. An organic solvent in which a pressure-sensitive adhesive composition can be uniformly dissolved is preferred in view of coating stability during film production. Examples of such an organic solvent include butane, hexane, heptane, toluene, o-xylene, m-xylene, p-xylene, cyclohexane, methanol, ethanol, isopropyl alcohol, 1-pentanol, cyclohexanol, 2-methylcyclohexanol, diethyl ether, isopropyl ether, dibutyl ether, dibenzyl ether, tetrahydrofuran, acetone, methyl ethyl ketone, methyl isobutyl ketone, 2-heptanone (methyl pentyl ketone), diisobutyl ketone, cyclohexanone, methylcyclohexanone, cyclopentanone, amyl acetate, methyl acetate, ethyl acetate, propyl acetate, butyl acetate, N,N-dimethylformamide (DMF), N,N-dimethylacetamide (DMAc), N-methylpyrrolidone, 2-methoxyethanol, 2-ethoxyethanol, and 2-butoxyethanol. The organic solvent is preferably ethyl acetate, toluene, xylene, or the like. Using the solvent, the solids content of a pressure-sensitive adhesive composition is generally controlled to be from 5 to 50% by weight, preferably from 5 to 30% by weight, more preferably from 10 to 25% by weight.

In general, the thickness of the pressure-sensitive adhesive layer formed is preferably, but not limited to, from about 2 to about 100 µm, more preferably from about 5 to about 40 µm, still more preferably from 10 to 30 µm. If the thickness is less than 2 µm, the fixing performance of the wound element-fixing tape may be degraded. The pressure-sensitive adhesive layer with a thickness of more than 100 µm can be too thick to easily handle.

A method for forming the pressure-sensitive adhesive layer according to the invention includes applying a pressure-sensitive adhesive composition to the supporting base material to form a pressure-sensitive adhesive composition layer. Various methods may be used to form the pressure-sensitive adhesive composition layer. For example, a continuous coating machine may be used to form the pressure-sensitive adhesive composition layer. In this case, for example, the method may include continuously feeding a pressure-sensitive adhesive composition (solution) and continuously extruding the composition into a thin layer on a sheet base through discharge means such as a die attached to the top of the machine. Alternatively, the pressure-sensitive adhesive composition layer may be formed by a batch method. In this case, the method may include casting a pressure-sensitive adhesive composition (solution) on the supporting base material with an applicator, a Mayer bar, or a knife coater. After the pressure-sensitive adhesive composition is deposited in the form of a thin layer on the supporting base material as described above, it is heated so that the solvent is removed.

The pressure-sensitive adhesive layer according to the invention preferably has an adhesive strength of 3.0 N/20 mm or more, more preferably of 3.5 N/20 mm or more, when attached to a stainless steel plate (JIS Z 0237) and then peeled off at a peeling angle of 90° and a pulling rate of 50 mm/minute. In this case, the pressure-sensitive adhesive tape according to the invention can form a wound element-fixing tape with desired adhesive strength.

A description is given below of the aluminum electrolytic capacitor of the invention. The aluminum electrolytic capacitor includes: a capacitor element including anode and cathode foils wound with a separator interposed therebetween; terminals connected to the anode and cathode foils, respectively; a sealing material and a case with which the foils and the terminals are sealed; and the aluminum electrolytic wound capacitor element-fixing tape that is used to fix the winding of the capacitor element. The tape does not break during the tape wrapping process so that a reduction in taping workability can be avoided. The tape can form an aluminum electrolytic capacitor without causing the problem of an unnecessary increase in the wound capacitor size.

### EXAMPLES

The invention is further described below with reference to some examples, which are not intended to limit the scope of the invention. Hereinafter, the term "part or parts" means "part or parts by weight."

### Example 1

The supporting base material used was made of 20 µm-thick single-layer Kraft paper with a density of 0.9 g/cm³ (manufactured by NIPPON KODOSHI CORPORATION).

A pressure-sensitive adhesive layer was prepared by the method described below. An acrylic polymer for use as a base polymer was prepared from a monomer mixture solution containing 100 parts of n-butyl acrylate and 5 parts of acrylic acid. Two parts of an isocyanate crosslinking agent (CORONATE L (trade name) manufactured by NIPPON POLYURETHANE INDUSTRY CO., LTD.) and 500 parts of toluene as a solvent were added to 100 parts of the acrylic polymer so that an acrylic pressure-sensitive adhesive solution was prepared. The acrylic pressure-sensitive adhesive solution was applied to the supporting base material and dried to form a 20 µm-thick pressure-sensitive adhesive layer.

### Example 2

The supporting base material used was made of two-layer Kraft paper (manufactured by NIPPON KODOSHI CORPORATION) that was composed of 15 µm-thick single-layer Kraft paper with a density of 0.95 g/cm³ (manufactured by NIPPON KODOSHI CORPORATION) and 15 µm-thick single-layer Kraft paper with a density of 0.75 g/cm³ (manufactured by NIPPON KODOSHI CORPORATION).

A pressure-sensitive adhesive layer was prepared by the method described below. An acrylic polymer for use as a base polymer was prepared from a monomer mixture solution containing 70 parts of n-butyl acrylate, 25 parts of 2-ethylhexyl acrylate and 5 parts of acrylic acid. Two parts of an isocyanate crosslinking agent (CORONATE L (trade name) manufactured by NIPPON POLYURETHANE INDUSTRY CO., LTD.) and 500 parts of toluene as a solvent were added to 100 parts of the acrylic polymer so that an acrylic pressure-sensitive adhesive solution was prepared. The acrylic pressure-sensitive adhesive solution was applied to the supporting base material and dried to form a 20 µm-thick pressure-sensitive adhesive layer.

### Comparative Example 1

A pressure-sensitive adhesive tape was prepared using the process of Example 1, except that the supporting base material used was made of 20 µm-thick single-layer Kraft paper with a density of 0.75 g/cm³ (manufactured by NIPPON KODOSHI CORPORATION).

### Comparative Example 2

A pressure-sensitive adhesive tape was prepared using the process of Example 2, except that the supporting base material used was made of two-layer Kraft paper (manufactured by NIPPON KODOSHI CORPORATION) that was composed of 15 µm-thick single-layer Kraft paper with a density of 0.85 g/cm³ (manufactured by NIPPON KODOSHI CORPORATION) and 15 µm-thick single-layer Kraft paper with a density of 0.75 g/cm³ (manufactured by NIPPON KODOSHI CORPORATION).

The pressure-sensitive adhesive tapes obtained in the examples and the comparative examples were evaluated by the method described below. The results of the evaluation are also shown below.

### Evaluation of Taping Workability

Each pressure-sensitive adhesive tape was cut 2.5 mm wide and wound into a disk-like shape. The tape was then run at a speed of 50 m/minute in a tape rewinding machine which was used to simulate a capacitor winding machine.

**Table 1**

| Evaluation Results | Example 1 | Example 2 | Comparative Example 1 | Comparative Example 2 |
|---|---|---|---|---|
| Taping Workability | Good | Good | Breaking | Breaking |

It has been demonstrated that when the pressure-sensitive adhesive tape according to the invention is used to fix an winding of an aluminum electrolytic capacitor element, the tape does not break during the tape wrapping process, the taping workability does not decrease, and an unnecessary increase in the size of the wound capacitor can be prevented. In contrast, it has also been demonstrated that according to the comparative examples, tape breakage can occur to reduce the taping workability in the tape wrapping process.

## Claims

1. An aluminum electrolytic wound capacitor element-fixing tape (3), comprising:
a supporting base material (1); and
a pressure-sensitive adhesive layer (2) provided on one side of the supporting base material (1), wherein
the supporting base material (1) comprises at least one layer of Manila hemp paper, Kraft paper, synthetic fiber paper, or mixed paper made of two or more thereof,
the supporting base material (1) has a density of more than 0.9 g/cm³, and
the supporting base material (1) has a thickness of 15 µm to 50 µm.

2. An aluminum electrolytic wound capacitor element-fixing tape (3), comprising:
a supporting base material (1-1, 1-2); and
a pressure-sensitive adhesive layer (2) provided on one side of the supporting base material (1-1, 1-2), wherein
the supporting base material (1-1, 1-2) comprises a multilayer laminate (1-1, 1-2) comprising at least two layers (1-1, 1-2) each made of Manila hemp paper, Kraft paper, synthetic fiber paper, or mixed paper made of two or more thereof,
at least one layer (1-2) of the multilayer laminate (1-1, 1-2) has a density of more than 0.9 g/cm³, and
the supporting base material (1-1, 1-2) has a thickness of 15 µm to 50 µm.

3. The aluminum electrolytic wound capacitor element-fixing tape (3) according to claim 2, wherein at least the outermost layer (1-2) of the multilayer laminate (1-1, 1-2) opposite to the pressure-sensitive adhesive layer (2) has a density of more than 0.9 g/cm³.

4. An aluminum electrolytic capacitor, comprising the aluminum electrolytic wound capacitor element-fixing tape (3) according to any one of claims 1 to 3.
